# FASCICULE DE BREVET EUROPEEN

(11) **EP 1 915 627 B1**
(45) Date de publication et mention de la délivrance du brevet: **21.01.2009**
(21) Numéro de dépôt: 06794238.3
(22) Date de dépôt: 27.07.2006
(51) Int. Cl.: G01P 3/80, G01S 11/12

(54) **PROCÉDÉ DE MESURE DE LA VITESSE DE DÉPLACEMENT**
METHODE ZUR MESSUNG DER FORTBEWEGUNGSGESCHWINDIGKEIT
DISPLACEMENT SPEED MEASUREMENT METHOD

(30) Priorité: 16.08.2005 FR 0508569
(43) Date de publication de la demande: 30.04.2008
(73) Titulaire: COMMISSARIAT A L'ENERGIE ATOMIQUE, 75015 Paris (FR)
(72) Inventeur: CATTIN, Viviane, F-38120 Saint Egreve (FR); GUILHAMAT, Bernard, F-38590 Saint Michel de Saint Geoirs (FR); LIONTI, Rosolino, F-38180 Seyssins (FR)
(74) Mandataire: Jouvray, Marie-Andrée
(86) Numéro de dépôt international: PCT/FR2006/001843
(87) Numéro de publication internationale: WO 2007/020339

(56) Documents cités:
- FR-A- 2 749 086
- US-A- 6 118 132
- US-A1- 2003 021 446

## Description

### Domaine technique de l'invention

L'invention concerne un procédé de mesure de la vitesse de déplacement d'un élément mobile par rapport à un élément fixe, au moyen d'un dispositif optique de mesure fixé à l'un des deux éléments et comprenant des moyens d'émission d'au moins un faisceau lumineux incident en direction de l'autre élément, des premier et second capteurs de la lumière diffusée par l'autre élément et des moyens de traitement, connectés auxdits capteurs, le procédé de mesure comportant au moins :
- l'émission du faisceau lumineux incident,
- la détection de la lumière diffusée par lesdits premier et second capteurs,
- la détermination, par les moyens de traitement, de la position du pic du maximum de corrélation, par corrélation des signaux fournis par les premier et second capteurs,
- la détermination d'une vitesse estimée, en fonction de la distance prédéterminée entre les premier et second capteurs et de ladite position du pic du maximum de corrélation.

### État de la technique

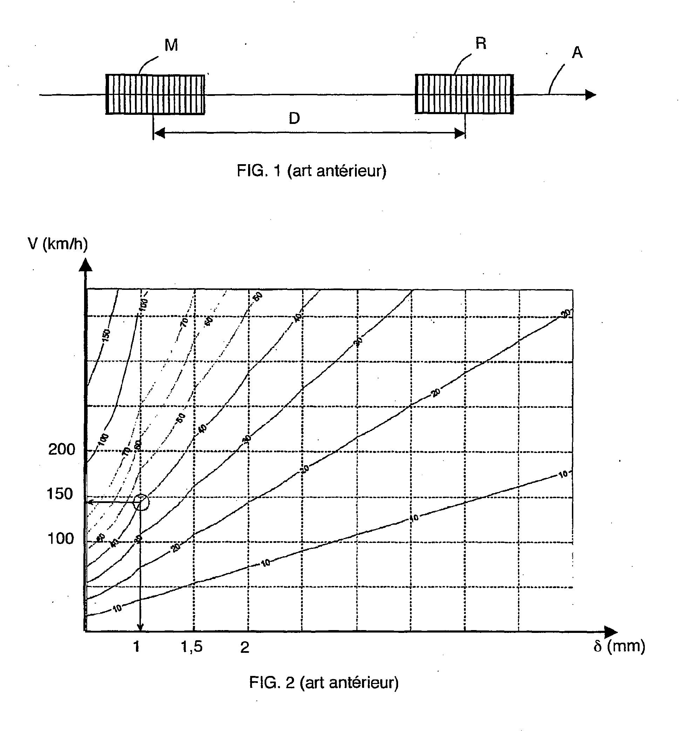

Pour mesurer la vitesse de déplacement d'un élément mobile par rapport à un élément fixe, par exemple la vitesse de déplacement longitudinale d'une voiture sur le sol, un dispositif optique de mesure par corrélation optique est classiquement utilisé. Comme représenté très schématiquement sur la figure 1, le dispositif de mesure, fixé, par exemple, sous la caisse de la voiture, est en mouvement selon l'axe de déplacement A. Le dispositif de mesure comporte classiquement des moyens d'émission (non représentés) d'au moins un faisceau lumineux incident en direction du sol, un premier capteur de référence R, disposé vers l'avant du véhicule, et un second capteur de mesure M, disposé vers l'arrière du véhicule. Les deux capteurs R et M sont destinés à détecter la lumière diffusée par le sol. Le dispositif de mesure comporte également des moyens de traitement, connectés aux capteurs R et M et destinés à déterminer la vitesse de déplacement du véhicule, la distance D entre le capteur de référence R et le capteur de mesure M étant connue.

Un procédé de mesure de la vitesse de déplacement, au moyen d'un tel dispositif de mesure optique, comporte au moins :
- l'émission du faisceaux lumineux incident vers le sol,
- la détection, par les premier R et second M capteurs, de la lumière diffusée par le sol,
- la détermination, par les moyens de traitement, de la position du pic du maximum de corrélation, par exemple par corrélation des signaux fournis par les capteurs R et M,
- la détermination d'une vitesse estimée Ve de déplacement, en fonction de la distance D prédéterminée séparant les capteurs de référence R et de mesure M et de ladite position du pic du maximum de corrélation.

Afin de conserver une bonne précision dans la détermination de la position du pic du maximum de corrélation, il est préférable de piloter la fréquence d'acquisition Fe des signaux reçus par les capteurs R et M, qui est aussi la fréquence d'échantillonnage de la fonction de corrélation. Le contrôle de cette fréquence permet de fixer toujours le pic du maximum de corrélation aux alentours de l'indice n, correspondant à un point de la fonction de corrélation et défini par l'équation n = τ . Fe, où τ est le temps de retard et Fe la fréquence d'échantillonnage.

Or, τ = D/Ve et Fe = Ve/ δ, Ve étant la vitesse estimée et δ la résolution spatiale du dispositif de mesure. L'indice n s'exprime alors selon la formule suivante : n = D/δ. L'indice n est donc une constante indépendante de la vitesse Ve. Quelle que soit la vitesse estimée Ve, le pic du maximum de corrélation se trouve toujours en ce point n.

Cependant, pour de très hautes vitesses de déplacement, ou pour de très faibles résolutions spatiales δ, la limite technologique du dispositif de mesure peut être atteinte. À titre d'exemple, le capteur de mesure M est une barrette de photodiodes de 64 composants élémentaires, ou pixels, avec une horloge de 2,5MHz, et la cadence maximale de la fréquence d'acquisition est de 40kHz. Comme représenté sur la figure 2, illustrant la vitesse V en km/h en fonction de la résolution spatiale δ en mm, pour les fréquences d'acquisition des signaux de 10kHz, 20kHz, 30kHz, 40kHz, 50kHz, 60kHz, 70kHz, 100kHz et 150kHz, la fréquence maximale de 40kHz est atteinte dès 150km/h, pour une résolution spatiale désirée de 1mm. Ainsi, un tel procédé de mesure ne permet pas d'effectuer de mesures à grandes vitesses, selon la résolution spatiale souhaitée.

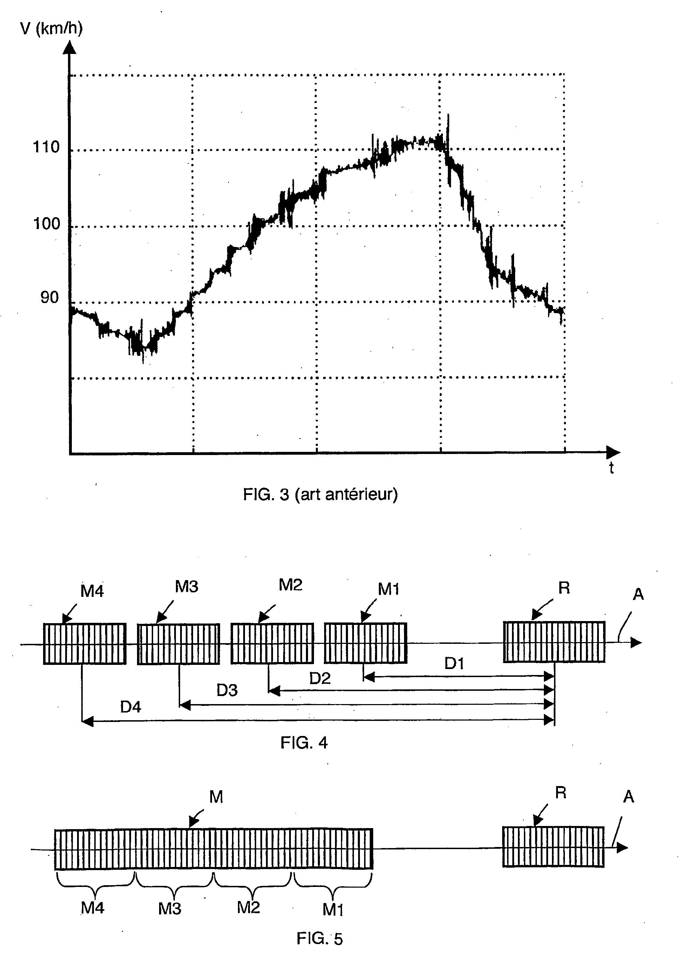

Par ailleurs, quand la fréquence d'acquisition est constante, l'indice n du pic du maximum de corrélation décroît lorsque la vitesse augmente. Il en résulte une perte de précision dans la détermination de la vitesse estimée. Ceci se traduit par exemple par de grandes variations dans les mesures, entraînant de grandes imprécisions, notamment lors de l'enregistrement d'une rampe de vitesse (figure 3).

Comme représenté sur la figure 3, illustrant la vitesse V en km/h en fonction du temps t, avec une fréquence d'acquisition maximale de 9kHz et une résolution spatiale de 1,5mm, l'enregistrement d'une rampe de vitesse d'un véhicule n'est pas net, car à chaque instant de mesure, la valeur de la vitesse estimée varie fortement. À titre d'exemple, la précision liée à l'échantillonnage à une vitesse de 11 0km/h est de l'ordre de 4km/h.

D'une manière générale, les imprécisions des mesures décrites ci-dessus sont liées à un sous-échantillonnage de la fonction de corrélation, qui entraîne une forte imprécision dans la détermination de la position du pic du maximum de corrélation. Pour remédier à ces inconvénients, plusieurs techniques de mesures ont été proposées, notamment par les documents US 2002/0199164, concernant les applications de positionnement de circuits imprimés, et US 6823077, concernant les souris optiques.

Le document FR 2749086 décrit un autre procédé de mesure de la vitesse de déplacement relative utilisant un premier et un second réseau linéaire de photodétecteurs.

Une première méthode consiste à utiliser les techniques d'interpolation. Un premier exemple propose l'interpolation de la position du pic du maximum de corrélation par des techniques classiques, à savoir polynôme, barycentre, spline, cubique, etc, sur les deux, trois ou quatre échantillons voisins de celui qui présente le maximum d'amplitude. Cependant, la forme du pic du maximum de corrélation peut être éloignée de celle de l'objet mathématique décrit par les équations d'interpolation. À titre d'exemple, l'interpolation polynomiale permet d'atténuer légèrement les variations de mesures de la figure 3, mais ne permet pas de les supprimer.

Un autre exemple de technique d'interpolation propose de chercher à localiser le pic du maximum de corrélation en identifiant le point de passage à zéro de sa dérivée. Cette technique fait intervenir une interpolation d'ordre 1 plus simple à filtrer a posteriori. Cependant, dans la pratique, il s'avère difficile de filtrer convenablement en temps réel les estimations ainsi calculées.

Un troisième exemple de technique d'interpolation propose de compenser l'erreur d'interpolation en tabulant les écarts à la vraie vitesse. Cependant, cette méthode ajoute du flou sur les valeurs de vitesses estimées.

Une seconde méthode consiste à compenser le décalage temporel du pic du maximum de corrélation introduit par la limitation de la cadence d'acquisition, l'ordre de grandeur de la vitesse recherchée étant a priori connu. Cette méthode peut être réalisée :
- après avoir calculé la fonction de corrélation échantillonnée et ayant estimé la fréquence d'acquisition optimale pour la résolution souhaitée, en décalant l'indice n du pic du maximum de corrélation juste avant le calcul de la vitesse,
- ou en estimant de combien d'échantillons de retard le pic du maximum de corrélation sera décalé et en appliquant ce décalage aux moyens de traitement, notamment sur une des deux voies en entrée du corrélateur associé aux moyens de traitement.

Cependant, dans la pratique, les techniques décrites ci-dessus sont des méthodes très sensibles à la précision d'estimation du décalage à compenser. Même si la précision sur la localisation du pic du maximum de corrélation est améliorée, les problèmes de précision concernant la détermination de la vitesse estimée subsistent.

Une troisième méthode de mesure consiste à ré-interpoler les signaux issus des capteurs R et M à la fréquence d'acquisition optimale, avant le calcul de la corrélation, l'ordre de grandeur de la vitesse cherchée étant a priori connu. Cependant, cette méthode est encore trop sensible à la qualité de prédiction de la fréquence d'acquisition optimale visée et s'avère peu efficace.

Une quatrième méthode de mesure consiste à effectuer un post-traitement de la vitesse estimée calculée. Cependant, les filtres lissant classiques, appliqués en temps réel sans une trop grande mémoire, ne permettent pas de lisser les sauts de vitesse qui s'avèrent trop raides.

Une .cinquième méthode de mesure consiste à diminuer le spectre des acquisitions temporelles au niveau des moyens de traitement, pour faciliter la localisation du pic du maximum de corrélation. La largeur du pic du maximum de corrélation étant inversement proportionnelle à la bande spectrale des signaux corrélés, en filtrant passe-bas les entrées du corrélateur au niveau des moyens de traitement, la largeur du pic du maximum de corrélation est augmentée et son interpolation est facilitée. Cependant, il s'avère difficile, dans la pratique, de construire un filtre efficace, quelle que soit la vitesse recherchée. Il s'avère soit trop large en laissant apparaître le problème de sous-échantillonnage, soit trop fin en épaississant trop fortement la corrélation, ce qui fausse l'estimation des vitesses.

De manière générale, aucune technique ou méthode de mesure connue ne permet de réaliser des mesures de vitesses précises.

### Objet de l'invention

L'invention a pour but de remédier à l'ensemble des inconvénients précités et a pour objet la réalisation d'un procédé de mesure de la vitesse de déplacement d'un élément mobile par rapport à un élément fixe permettant de déterminer facilement et avec précision la vitesse de l'élément mobile, quels que soient les ordres de grandeur de la vitesse et de la résolution spatiale du dispositif mettant en oeuvre un tel procédé de mesure.

Selon l'invention, ce but est atteint par les revendications annexées et, plus particulièrement, par le fait que, le dispositif optique de mesure comportant un premier capteur de référence et une pluralité de seconds capteurs de mesure distincts, sensiblement alignés selon l'axe de déplacement de l'élément mobile, le procédé de mesure comporte :
- la détermination de vitesses estimées, à partir des signaux fournis par le capteur de référence et chacun des capteurs de mesure,
- et le calcul d'une vitesse moyenne desdites vitesses estimées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente très schématiquement un dispositif optique de mesure mettant en oeuvre un procédé de mesure de la vitesse de déplacement selon l'art antérieur.
La figure 2 est un graphique représentant la vitesse en fonction de la résolution spatiale, pour différentes fréquences d'acquisition d'un procédé de mesure selon l'art antérieur.
La figure 3 est un graphique représentant la vitesse en fonction du temps, lors de l'enregistrement d'une rampe de vitesse d'un procédé de mesure selon les figures 1 et 2.
La figure 4 représente très schématiquement un dispositif optique de mesure mettant en oeuvre un procédé de mesure de la vitesse de déplacement selon l'invention.
La figure 5 représente très schématiquement un dispositif optique de mesure mettant en oeuvre une variante de réalisation d'un procédé de mesure de la vitesse de déplacement selon l'invention.
La figure 6 est un graphique représentant la vitesse estimée en fonction de la vitesse réelle, pour les vitesses estimées de différents capteurs de mesure et pour la vitesse moyenne de ces vitesses estimées, pour un procédé de mesure selon les figures 4 et 5.
La figure 7 est un graphique illustrant l'erreur relative maximale sur les vitesses estimées, en fonction du nombre de capteurs de mesure, pour le procédé de mesure selon les figures 4 à 6.
La figure 8 est un graphique représentant la vitesse en fonction du temps, lors de l'enregistrement d'une rampe de vitesse d'un procédé de mesure selon les figures 4 à 7.
La figure 9 représente très schématiquement un capteur d'un dispositif de mesure mettant en oeuvre une variante de réalisation d'un procédé de mesure de la vitesse de déplacement selon l'invention.

### Description de modes particuliers de réalisation

Pour résoudre les problèmes engendrés par les procédés de mesure selon l'art antérieur, une première solution consisterait à compenser la diminution du retard (lié au fait que la vitesse augmente) en augmentant la base de calcul du corrélateur des moyens de traitement, c'est-à-dire en déplaçant le capteur de mesure M. En considérant, par exemple, que le capteur de mesure M est une barrette photosensible placée dans le sens longitudinal de la vitesse, selon l'axe de déplacement A, il est nécessaire d'utiliser une barrette relativement longue, afin d'augmenter la base du corrélateur. À titre d'exemple, avec une fréquence d'acquisition limitée à 40kHz, pour conserver une précision de 1,5% sur la vitesse jusqu'à 400km/h, il faut doubler la base de corrélation, c'est-à-dire avoir une barrette photosensible de l'ordre de 180mm. Cependant, cette solution n'est techniquement pas envisageable, car il faudrait utiliser une barrette photosensible illuminée sur une trop longue distance.

En référence aux figures, le procédé de mesure selon l'invention consiste à utiliser le capteur de référence R et une pluralité de capteurs de mesure Mi voisins et distincts, i étant supérieur ou égal à deux, sensiblement alignés dans le sens longitudinal de déplacement, selon l'axe de déplacement A. Le procédé de mesure comporte alors la détermination d'une vitesse estimée Ve(Mi), selon le même principe que précédemment, à partir des signaux fournis par le capteur de référence R et par chacun des capteurs de mesure Mi. Le procédé de mesure consiste enfin à calculer la vitesse moyenne Vmoy des différentes vitesses estimées Ve(Mi) calculées au préalable. En moyennant ces vitesses estimées Ve(Mi), l'erreur due à la discrétisation du retard estimé par chaque capteur de mesure Mi est alors annulée.

Sur la figure 4, le mode particulier de réalisation du dispositif de mesure optique, mettant en oeuvre un tel procédé de mesure, comporte un capteur de référence R et quatre capteurs de mesure M1 à M4 (i allant de 1 à 4). Les capteurs R et M1 à M4 sont, par exemple, des barrettes photosensibles du type dispositif à couplage de charge (CCD) et les distances D1 à D4 entre le capteur de référence R et chaque capteur de mesure M1 à M4 sont connues.

Le procédé de mesure consiste, par l'intermédiaire d'un tel dispositif de mesure, à déterminer une vitesse estimée Ve(Mi), à partir des signaux fournis par le capteur de référence R et chaque capteur de mesure Mi. Dans le mode particulier de la figure 4, le procédé comporte la détermination de quatre vitesses estimées Ve(M1), Ve(M2), Ve(M3), Ve(M4), pour chaque capteur de mesure M1 à M4, et la détermination de la vitesse moyenne Vmoy des quatre vitesses estimées Ve(M1) à Ve(M4).

La variante de réalisation de la figure 5 se distingue du mode de réalisation de la figure 4 par les capteurs de mesure Mi, pris en compte pour déterminer les vitesses estimées Ve(Mi). Sur la figure 5, le dispositif de mesure ne comporte qu'un seul capteur de mesure M. Les capteurs de référence R et de mesure M sont, par exemple, des barrettes photosensibles composées d'une pluralité de composants élémentaires, ou pixels. Quatre groupes successifs et adjacents de composants élémentaires distincts constituent les capteurs de mesure M1, M2, M3 et M4, les distances D1 à D4 entre le capteur de référence R et les capteurs de mesure M1 à M4 étant connues. Chaque capteur de mesure Mi peut comporter un seul composant élémentaire ou une pluralité de composants élémentaires adjacents, comme représenté sur la figure 5. La détermination de la vitesse moyenne Vmoy s'effectue de la même façon que précédemment en moyennant les vitesses estimées Ve(M1), Ve(M2), Ve(M3), Ve(M4), calculées au préalable pour chaque capteur de mesure M1 à M4.

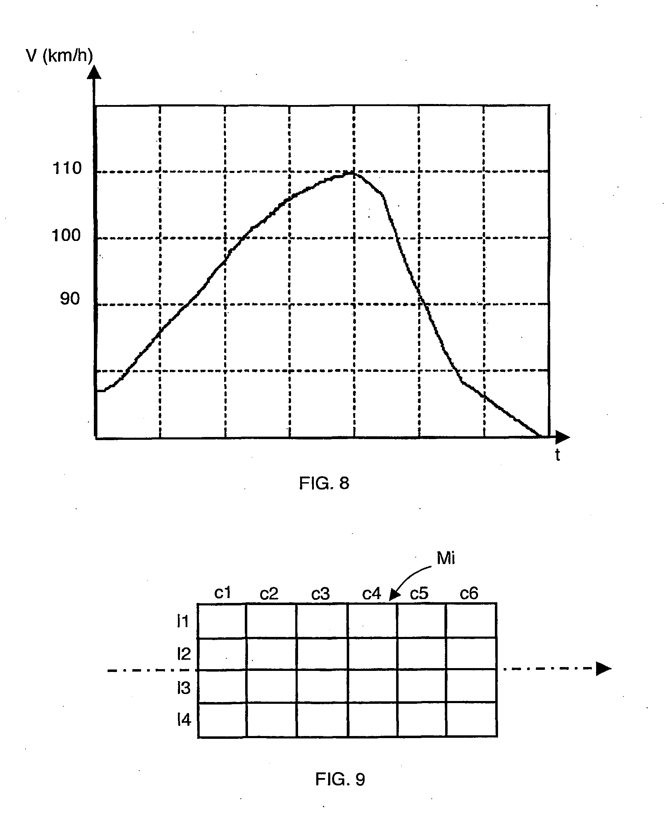

D'une manière générale, les capteurs de référence R et/ou de mesure Mi peuvent être constitués d'au moins une partie d'une matrice de composants élémentaires de n lignes et m colonnes, n et m étant supérieurs ou égaux à 1. Comme représenté schématiquement sur la figure 9, un capteur de mesure Mi peut être constitué d'une matrice de composants élémentaires, comportant, par exemple, quatre lignes I1 à I4 et six colonnes c1 à c6.

L'utilisation de telles matrices de composants élémentaires permet notamment d'améliorer la faisabilité du procédé de mesure. En effet, il est plus aisé de manipuler des surfaces importantes de composants élémentaires plutôt que des éléments séparés. La précision du procédé de mesure est également améliorée, les composants élémentaires de la matrice étant de fait alignés entre eux. Par ailleurs, le coût d'un tel procédé de mesure est également optimisé, l'utilisation d'une matrice entière de composants élémentaires étant plus rentable que la fabrication de barrettes ou que le découpage d'une matrice, et le fonctionnement du procédé de mesure est aussi optimisé, dans la mesure où il est possible de cumuler une grande quantité de lumière détectée par un grand nombre de capteurs différents.

D'une manière générale, les procédés de mesure selon l'art antérieur proposent de faire une pluralité de mesure mais en considérant toujours le même capteur de mesure M. Il en résulte l'apparition d'une erreur identique à chaque mesure. Le procédé de mesure selon l'invention propose d'effectuer une pluralité de mesure mais en considérant à chaque nouvelle mesure un capteur de mesure Mi différent. Le calcul de la vitesse estimée correspondante Ve(Mi), pour chaque capteur de mesure Mi, présente une erreur, mais celle-ci est compensée par l'ensemble des erreurs engendrées par le calcul des vitesses estimées Ve(Mi) de l'ensemble des capteurs de mesure Mi. La moyenne de ces vitesses estimées Ve(Mi) permet alors d'atténuer les erreurs de chaque capteur Mi, voir même de les compenser et de les supprimer complètement.

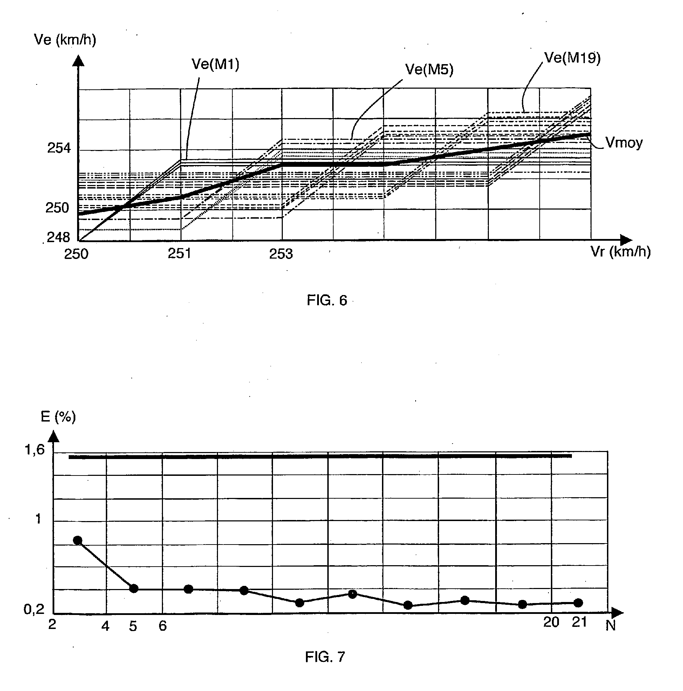

En effet, comme illustrée sur la figure 6, représentant la vitesse estimée Ve en km/h en fonction de la vitesse réelle Vr en km/h, pour vingt et un capteurs de mesures M1 à M21 distincts, les vitesses estimées Ve(Mi), i allant de 1 à 21, sont mesurées pour une vitesse réelle Vr comprise entre 250km/h et 255km/h, avec une fréquence d'acquisition limite de l'ordre de 40kHz.

Pour chaque valeur de la vitesse estimée Ve(Mi), i allant de 1 à 21, l'estimation de la vitesse estimée Ve(Mi) saute de plusieurs km/h par palier. Ce palier est sensiblement identique pour chaque vitesse estimée Ve(Mi) et correspond sensiblement à l'ordre de grandeur des variations de mesures observées sur la rampe de vitesse de la figure 3. À titre d'exemple, le palier est de l'ordre de 4km/h, dans le mode particulier de la figure 3.

Ce palier de discrétisation ne se produit pas à la même vitesse réelle, pour les différents capteurs de mesure Mi. À titre d'exemple, la vitesse estimée Ve(M1), représentée en trait fin continu sur la figure 6, passe de 248km/h à environ 253 km/h, entre les vitesses réelles de 250km/h et 251 km/h. La vitesse estimée Ve(M5), représentée par des traits pointillés sur la figure 6, passe de 249km/h à 254km/h entre les vitesses réelles de 251km/h et 253km/h. La vitesse estimée Ve(M19), représentée également en traits pointillés sur la figure 6, passe de 251km/h à environ 256km/h entre les vitesses réelles de 255km/h et 257km/h.

Cet effet de discrétisation n'apparaît donc pas à la même vitesse pour tous les capteurs de mesures Mi, les distances D1 à D21 entre le capteur de référence R et les capteurs de mesure M1 à M21 étant toutes différentes. En utilisant les différents capteurs R et Mi, les paliers sont décalés et les erreurs observées sur chaque capteur de mesure se compensent pour donner une vitesse moyenne Vmoy, représentée en trait épais noir sur la figure 6, sensiblement rectiligne. Cette vitesse moyenne Vmoy se rapproche d'une droite théorique idéale, qui ferait coïncider la vitesse réelle et la vitesse calculée.

Un tel procédé de mesure, déterminant une vitesse moyenne Vmoy tenant compte d'une pluralité de vitesses estimées Ve(Mi), permet ainsi de réduire considérablement les erreurs. Comme représenté sur la figure 7, illustrant l'erreur relative E maximale sur la vitesse en fonction du nombre de vitesses estimées N prises en compte pour le calcul de la vitesse moyenne Vmoy, l'erreur relative maximale observée avec une seule vitesse estimée correspondant à un seul capteur de mesure, représentée par une droite en trait épais continu, est de l'ordre de 1,6%, soit près de 6km/h à une vitesse de 400km/h. L'erreur est continue, car chaque prise de mesure s'effectue avec le même capteur de mesure. Par contre, à partir de cinq vitesses estimées avec cinq capteurs différents, on note que l'erreur relative E descend en dessous de 0,5%, vers 0,4%, et peut même atteindre 0,3% avec vingt et une vitesses estimées.

Ce phénomène de réduction de l'erreur se traduit notamment par une atténuation presque complète des variations de mesures et une précision beaucoup plus importante sur l'estimation des vitesses. Sur la figure 8, illustrant la vitesse en fonction du temps, lors de l'enregistrement d'une rampe de vitesse avec les mêmes caractéristiques que sur la figure 3, à savoir avec une fréquence d'acquisition maximale de 9kHz et une résolution spatiale de 1,5m, huit valeurs de vitesses estimées (donc huit capteurs de mesure M1 à M8) permettent d'obtenir, après calcul de la vitesse moyenne Vmoy, une courbe beaucoup plus lisse et plus précise. L'imprécision liée à l'échantillonnage à 110km/h est pratiquement gommée.

Quels que soient les capteurs de mesure Mi utilisés, un tel procédé de mesure permet donc d'obtenir une grande précision dans l'estimation de la vitesse d'un élément mobile par rapport à un élément fixe. Par ailleurs, un tel procédé offre la possibilité à l'utilisateur de donner un indice de confiance sur l'estimation calculée en fonction de nombre de bonnes estimations faites sur chaque capteur de mesure.

À titre d'exemple, le procédé donne un indice de confiance à N, si les N estimations de vitesse obtenues avec les N capteurs Mi sont semblables (à l'erreur de discrétisation près) et le procédé donne un indice de confiance à 1 si une seule des N estimations de vitesse obtenues avec les N capteurs Mi semble correcte.

L'invention n'est pas limitée aux différents modes de réalisation décrits ci-dessus. Le procédé de mesure peut s'appliquer lorsque la fréquence d'acquisition n'est pas limitée, afin de gagner en précision d'estimation.

Par ailleurs, le capteur de référence R et les capteurs de mesure Mi du dispositif optique mettant en oeuvre un tel procédé de mesure peuvent être alignés, comme représenté sur les figures 1, 4 et 5, ou peuvent être disposés sensiblement perpendiculairement. À titre d'exemple, le capteur de référence R est positionné perpendiculairement à l'axe de déplacement A et les capteurs de mesure Mi sont alignés et disposés dans l'axe de déplacement A, perpendiculairement au capteur de référence R. Une telle configuration permet notamment de mesurer la vitesse transversale de l'élément mobile, en plus de la vitesse longitudinale.

Un tel procédé de mesure s'applique notamment pour mesurer la vitesse d'une voiture sur le sol, le dispositif de mesure étant fixé indifféremment sur le sol ou sur le dessous de la voiture. Une autre application peut être le calcul de la vitesse de défilement et de la hauteur d'objets sur des chaînes de fabrication (finalité de tri, reconnaissance d'objets manufacturés, etc). Une autre application peut également être la mesure de la vitesse de défilement de fils ou de tringles dans des chaînes de fabrication (fileuse, tissage, laminoir, etc).

## Revendications

1. Procédé de mesure de la vitesse de déplacement d'un élément mobile par rapport à un élément fixe, au moyen d'un dispositif optique de mesure fixé à l'un des deux éléments et comprenant des moyens d'émission d'au moins un faisceau lumineux incident en direction de l'autre élément, des premier (R) et second (M) capteurs de la lumière diffusée par l'autre élément et des moyens de traitement, connectés auxdits capteurs (R, M), le procédé de mesure comportant au moins :
- l'émission du faisceau lumineux incident,
- la détection de la lumière diffusée par lesdits premier (R) et second (M) capteurs,
- la détermination, par les moyens de traitement, de la position du pic du maximum de corrélation, par corrélation des signaux fournis par les premier (R) et second (M) capteurs,
- la détermination d'une vitesse estimée (Ve), en fonction de la distance (D) prédéterminée entre les premier (R) et second (M) capteurs et de ladite position du pic du maximum de corrélation,
procédé **caractérisé en ce que**, le dispositif optique de mesure comportant un premier capteur de référence (R) et une pluralité de seconds capteurs de mesure (Mi) distincts, sensiblement alignés selon l'axe de déplacement (A) de l'élément mobile, le procédé de mesure comporte :
- la détermination de vitesses estimées (Ve(Mi)), à partir des signaux fournis par le capteur de référence (R) et chacun des capteurs de mesure (Mi),
- et le calcul d'une vitesse moyenne (Vmoy) desdites vitesses estimées (Ve(Mi)).

2. Procédé selon la revendication 1, **caractérisé en ce qu'**un capteur (R, Mi) est constitué par au moins une partie d'une matrice de composants élémentaires.

3. Procédé selon l'une des revendications 1 et 2, **caractérisé en ce que** lesdits capteurs (R, Mi) sont constitués par au moins une barrette photosensible.

4. Procédé selon la revendication 3, **caractérisé en ce que** deux capteurs de mesure (Mi) adjacents sont constitués par des groupes adjacents de composants élémentaires d'une même barrette.

5. Procédé selon la revendication 3, **caractérisé en ce que** deux capteurs de mesure (Mi) adjacents sont constitués par deux barrettes distinctes.

## Claims

1. Measurement method for measuring the displacement speed of a moving element with respect to a fixed element by means of an optic measuring device fixed to one of the two elements and comprising means for emitting at least one incident light beam in the direction of the other element, first (R) and second (M) sensors detecting the light diffused by the other element, and processing means connected to said sensors (R, M), the measurement method comprising at least:
- emission of the incident light beam,
- detection of the light diffused by said first (R) and second (M) sensors,
- determination, by the processing means, of the position of the maximum correlation peak by correlation of the signals supplied by the first (R) and second (M) sensors,
- determination of an estimated speed (Ve) according to the predetermined distance (D) between the first (R) and second (M) sensors and said position of the maximum correlation peak.
method **characterized in that**, the optic measuring device comprising a first reference sensor (R) and a plurality of distinct second measurement sensors (Mi) substantially aligned along the axis of movement (A) of the moving element, the measurement method comprises:
- determination of estimated speeds (Ve(Mi)) from the signals supplied by the reference sensor (R) and each of the measurement sensors (Mi),
- and calculation of a mean speed (Vmean) of said estimated speeds (Ve(Mi)).

2. Method according to claim 1, **characterized in that** a sensor (R, Mi) is constituted by at least a part of a matrix of elementary components.

3. Method according to one of claims 1 and 2, **characterized in that** said sensors (R, Mi) are formed by at least one photosensitive array.

4. Method according to claim 3, **characterized in that** two adjacent measurement sensors (Mi) are formed by adjacent groups of elementary components of one and the same array.

5. Method according to claim 3, **characterized in that** two adjacent measurement sensors (Mi) are formed by two distinct arrays.

## Patentansprüche

1. Verfahren zur Messung der Bewegungsgeschwindigkeit eines beweglichen Elements bezüglich einem feststehenden Element mittels einer optischen Messvorrichtung, die an einem der beiden Elemente befestigt ist und Mittel zum Ausstrahlen mindestens eines in Richtung auf das andere Element auftreffenden Lichtstrahls umfasst, einen ersten (R) und einen zweiten (M) Messfühler für das von dem anderen Element ausgestrahlte Licht sowie Verarbeitungsmittel, die an die genannten Messfühler (R, M) angeschlossen sind, wobei das Messverfahren mindestens umfasst:
- die Ausstrahlung des auftreffenden Lichtstrahls,
- die Erfassung des vom ersten (R) und zweiten Messfühler (M) ausgestrahlten Lichts,
- die Bestimmung der Position des Spitzenwerts des Korrelationsmaximums mittels der Verarbeitungsmittel durch Korrelation der vom ersten (R) und zweiten Messfühler (M) erzeugten Signale,
- die Bestimmung einer geschätzten Geschwindigkeit (Ve) abhängig vom vorbestimmten Abstand (D) zwischen dem ersten (R) und zweiten Messfühler (M) und der Position des Spitzenwerts des Korrelationsmaximums,
Verfahren, das **dadurch gekennzeichnet ist, dass** das Messverfahren, nachdem die optische Messvorrichtung einen ersten Referenzmessfühler (R) und mehrere verschiedene zweite Messfühler (Mi) umfasst, die im Wesentlichen auf die Bewegungsachse (A) des beweglichen Elements gefluchtet sind, umfasst:
- die Bestimmung geschätzter Geschwindkeiten (Ve(Mi)) auf der Grundlage der von dem Referenzmessfühler (R) und jeden Messfühlern (Mi) gelieferten Signale,
- und die Berechnung einer mittleren Geschwindigkeit (Vmoy) der geschätzten Geschwindigkeiten (Ve(Mi)).

2. Verfahren nach Anspruch 1, **dadurch gekennzeichnet, dass** ein Messfühler (R, Mi) von mindestens einem Teil einer Matrix aus elementaren Bauteilen gebildet wird.

3. Verfahren nach einem der Ansprüche 1 und 2, **dadurch gekennzeichnet, dass** die Messfühler (R, Mi) von mindestens einer lichtempfindlichen Leiste gebildet werden.

4. Verfahren nach Anspruch 3, **dadurch gekennzeichnet, dass** zwei aneinander angrenzende Messfühler (Mi) von aneinander angrenzenden Gruppen elementarer Bauteile ein und derselben Leiste gebildet werden.

5. Verfahren nach Anspruch 3, **dadurch gekennzeichnet, dass** zwei aneinander angrenzende Messfühler (Mi) von zwei verschiedenen Leisten gebildet werden.
